# EUROPÄISCHE PATENTSCHRIFT

(11) **EP 3 976 413 B1**
(45) Veröffentlichungstag und Bekanntmachung des Hinweises auf die Patenterteilung: **23.08.2023**
(21) Anmeldenummer: 20729984.3
(22) Anmeldetag: 27.05.2020
(51) Int. Cl.: B60K 35/00, B60K 37/06, G06F 1/16

(54) **ANZEIGEVORRICHTUNG FÜR EIN FAHRZEUG**
DISPLAY DEVICE FOR A VEHICLE
DISPOSITIF D'AFFICHAGE POUR UN VÉHICULE

(30) Priorität: 28.05.2019 DE 102019114357
(43) Veröffentlichungstag der Anmeldung: 06.04.2022
(73) Patentinhaber: Behr-Hella Thermocontrol GmbH, 59557 Lippstadt (DE)
(72) Erfinder: HAGEN, Andreas, 59590 Geseke (DE); FUST, Winfried, 59558 Lippstadt (DE)
(74) Vertreter: dompatent von Kreisler Selting Werner - Partnerschaft von Patent- und Rechtsanwälten mbB
(86) Internationale Anmeldenummer: PCT/EP2020/064729
(87) Internationale Veröffentlichungsnummer: WO 2020/239851

(56) Entgegenhaltungen:
- WO-A1-2019/016223
- DE-A1-102009 048 682
- DE-A1-102015 007 502
- DE-A1-102016 004 533
- DE-A1-102018 215 403
- US-A1- 2015 077 909
- US-A1- 2016 110 004
- US-B2- 7 420 798
- US-B2- 9 047 044
- US-B2- 9 151 978

## Beschreibung

Die Erfindung betrifft eine Anzeigevorrichtung für ein Fahrzeug, die gegebenenfalls neben der Darstellung von Informationen auch der manuellen Eingabe von Befehlen dienen kann, wozu die Anzeigevorrichtung beispielsweise als Touchscreen ausgeführt sein kann.

Anzeigevorrichtungen mit Displays werden in Fahrzeugen zunehmend verbaut. Sie können beispielsweise als sogenannte CID (Central Input Devices) eingesetzt werden und weisen dann auch die Funktion der Befehlseingabe auf. In diesen Fällen handelt es sich dann zumeist um Touchscreens, die die unterschiedlichsten grafischen Oberflächen aufweisen können.

In den letzten Jahren haben freistehend an und/oder auf den Instrumententafeln angeordnete Anzeigevorrichtungen Einzug im Automotive-Bereich gehalten. Diese Anzeigevorrichtungen weisen eine stabile Rückwand auf, die der Halterung des Displays der Anzeigevorrichtung dient. Die freistehenden Anzeigevorrichtungen sind entweder starr oder beweglich an der Instrumententafel angeordnet, um bei Nichtgebrauch automatisch in eine Ruhe- bzw. Rückzugsposition überführt werden zu können.

Aus Stabilitätsgründen weisen die Rückwände bzw. rückwärtigen Gehäuseschalen der zuvor genannten Anzeigevorrichtungen Metall bzw. Metallguss auf.

Die Fixierung der Displays an den Gehäuseschalen bzw. Rückwänden erfolgt im Stand der Technik mittels Klebebänder, wobei die Rückseite des Displays flächig an der Gehäuseschale bzw. deren Rückwand anliegt. Hierbei ist es erforderlich, dass die Rückwand plan ausgeführt ist. Denn die heutzutage überwiegend eingesetzten TFT-Displays sind recht empfindlich gegenüber mechanischen Spannungen und zeigen optische Auffälligkeiten, wenn sie auf unebenen Flächen fest verklebt werden.

In DE-A-197 22 682 ist eine Anzeigevorrichtung für Omnibusse beschrieben, die hinter einen Seiten-, Front- oder Heckscheibe eines Omnibusses angeordnet ist. Die Anzeigevorrichtung weist ein Display auf, das von einer Befestigungseinrichtung gehalten ist. Die Befestigungseinrichtung ist an der Vorderseite, die im Einbauzustand der Anzeigevorrichtung der betreffenden Scheibe des Omnibusses zugewandt ist, offen, so dass die Anzeigefläche des Display von außen durch die betreffenden Omnibus-Scheibe sichtbar ist. Die Befestigungseinrichtung ist an der betreffenden Scheibe lösbar befestigbar, wobei die Anzeigefläche des Displays von der Omnibus-Scheibe beabstandet ist.

DE-A-10 2014 019 324 beschreibt eine Anzeigevorrichtung mit Display für den Einbau in ein Fahrzeug, wobei die Anzeigevorrichtung einen das Display umschließenden Zierrahmen aufweist.

US-A-7 420 798 beschreibt einen Laptop mit einer Anzeigevorrichtung, die ein von einer Abdeckscheibe überdecktes Display aufweist, das von einem den Rand des Displays allseitig überlappenden und am Rand des Displays anliegenden Rahmen umgeben ist. Der Rahmen weist nach unten in eine Gehäuseschale hineinragende Vorsprünge auf, an denen sich innenseitig Polsterstücke befinden, die das Display kontaktieren. Rückseitig des Displays, das mit Abstand zur Rückwand der Gehäuseschale angeordnet ist, befinden sich querverlaufende Halteleisten, die die Rückseite des Displays überspannen und an ihren nach oben abgewinkelten Enden außenseitig mit den Vorsprüngen des Zierrahmens verbunden sind.

Aus DE-A-10 2009 048 682, DE-A-10 2015 007 502 und US-A-2016/0110004 sind weitere Anzeigevorrichtungskonstruktionen bekannt.

Aufgabe der Erfindung ist es, eine Anzeigevorrichtung für ein Fahrzeug zu schaffen, deren Display mit ausreichender Stabilität und Festigkeit an einer rückwärtigen Gehäuseschale angebracht ist, ohne dass es einer flächigen Verklebung von Display und Gehäuseschale bedarf.

Zur Lösung dieser Aufgabe wird mit der Erfindung eine Anzeigevorrichtung für ein Fahrzeug vorgeschlagen, die versehen ist mit
- einem Display mit einer Anzeigefläche an einer Vorderseite und mit einer dieser abgewandten Rückseite,
- einer vor der Anzeigefläche angeordneten Abdeckscheibe,
- einem mit dem Rand der Abdeckscheibe verbundenen Zierrahmen, der allseitig über den Rand des Displays übersteht, und
- einer rückseitigen Gehäuseschale, die eine Rückwand mit einem von dieser aufragenden Randsteg aufweist,
- wobei die Rückwand der Gehäuseschale mit Abstand zur Rückseite des Displays angeordnet ist und
- wobei der Randsteg der Gehäuseschale mit dem Zierrahmen mittels eines Klebers verbunden ist.

Nach dem erfindungsgemäßen Konzept erfolgt die Verbindung der rückwärtigen Gehäuseschale bzw. der rückwärtigen Wand der Anzeigevorrichtung durch Verklebung der Gehäuseschale an deren Rand mit dem Zierrahmen der Anzeigevorrichtung. Der Zierrahmen der Anzeigevorrichtung selbst ist Teil der Abdeckscheibe, die auch als "Coverglas" bezeichnet wird. Die Rückwand der Anzeigevorrichtung ist zu diesem Zweck als Gehäuseschale mit aufragendem Randsteg ausgebildet, der umlaufend ausgeführt ist. Der Randsteg ragt also von der Rückwand (d. h. Bodenwand der Gehäuseschale) auf und umgibt das Display allseitig. Das freie Ende des Randstegs ist mittels des Klebers mit dem Zierrahmen verbunden, der seinerseits die Abdeckscheibe allseitig umgibt. Im verbundenen Zustand von Gehäuseschale und Zierrahmen ist die Rückseite des Displays von der Rückwand der Gehäuseschale beabstandet; zwischen beiden befindet sich also ein Luftspalt. Damit ist das Display nicht mehr in Kontakt mit der Rückseite und insbesondere nicht mehr flächig mit der Rückseite verklebt. Das Display ist, wie es an sich üblich ist, mittels einer transparenten Kleberschicht (Optisches Bonding) an der Abdeckscheibe befestigt bzw. montiert und "hängt" also an dieser. Diese Verbindung von Display und Abdeckscheibe ist im Hinblick auf die in einem Fahrzeug beim Fahren herrschenden Vibrationen stabil. Mechanische Spannungen zwischen dem Display und der Abdeckscheibe können nicht auftreten, da sowohl die Anzeigefläche des Displays als auch die Abdeckscheibe grundsätzlich plan sind. Will man gewölbte Abdeckscheiben einsetzen, so wird der Unterschied zwischen der gewölbten Abdeckscheibe und der planen Anzeigefläche des Display durch den transparenten Kleber ausgeglichen bzw. es existieren inzwischen Displays mit gewölbten Anzeigeflächen, deren Form folgend die Abdeckscheiben ausgebildet sind, womit beide wiederum mit gleichbleibendem Abstand angeordnet verklebt werden können. In all diesen Varianten kann auch ein Touchpanel als Berührungssensorik vorgesehen sein, das bzw. die optisch, kapazitiv, induktiv oder resistiv arbeitet.

Wie bereits oben erwähnt, eignet sich die Erfindung insbesondere für freistehend angeordnete Anzeigevorrichtungen. Hierzu weist die Gehäuseschale ein typischerweise integral ausgeführtes Montageteil für die Montage der Gehäuseschale in einem Fahrzeug zur freistehenden Anordnung der Anzeigevorrichtung an der und/oder auf der und/oder in der Fahrzeug-Instrumententafel auf. Alternativ ist es auch möglich, dass die Gehäuseschale mit einer Aus- und Einfahrmechanik gekoppelt ist, mit der sich die Anzeigevorrichtung automatisch aus- und einfahren lässt.

In weiterer zweckmäßiger Ausgestaltung der Erfindung ist vorgesehen, dass der den Randsteg der Gehäuseschale mit dem Zierrahmen an der Abdeckscheibe des Display verbindende Kleber in Form eines streifenförmigen Klebermaterialbetts auf dem Zierrahmen verlaufend ausgebildet ist, in das der Randsteg der Gehäuseschale an seinem der Rückwand der Gehäuseschale abgewandten Ende eintaucht. Das streifenförmige Klebermaterialbett wird mitunter auch als "Kleberaupe" bezeichnet.

Hinsichtlich der Möglichkeit des Toleranzausgleichs ist es von Vorteil, wenn der Randsteg der Gehäuseschale an seinem der Rückwand der Gehäuseschale abgewandten Ende in das Klebermaterialbett unter - in Verlängerung des Randstegs betrachtet - Einhaltung eines Abstands zum Zierrahmen eingetaucht ist.

In weiterer zweckmäßiger Ausgestaltung der Erfindung ist vorgesehen, dass der Zierrahmen einen um die Abdeckscheibe umlaufenden Verbindungsabschnitt mit einer Kleberauftragfläche für den den Randsteg der Gehäuseschale mit dem Zierrahmen an der Abdeckscheibe des Display verbindenden Kleber aufweist. Der Zierrahmen ist, wie bereits oben erwähnt, seinerseits an der Abdeckscheibe befestigt und umlaufend längs deren Rand ausgebildet. Am Zierrahmen ist eine Kleberauftragfläche angeordnet, die sich in einem Verbindungsabschnitt des Zierrahmens befindet, der gegebenenfalls unter Zwischenschaltung des streifen- bzw. strangförmigen Klebermaterialbetts der Verbindung zum Randsteg der Gehäuseschale dient. Der Randsteg kann an dem Zierrahmen anliegen oder aber auch durch teilweises Eintauchen in das Klebermaterialbett mit Abstand zum Verbindungsabschnitt des Zierrahmens angeordnet sein.

Typischerweise ist das Display an seiner Anzeigefläche mittels einer transparenten Kleberschicht mit der Abdeckscheibe verbunden und/oder weist das Display oder die Abdeckscheibe ein kapazitiv, induktiv, optisch oder resistiv arbeitendes Touchpanel oder Berührungssensorik auf. Das Touchpanel ist normalerweise mittels eines optisch transparenten Klebers mit der Abdeckscheibe und/oder mit der Anzeigefläche des Displays verbunden, kann aber auch integraler Bestandteil des Displays sein.

Typischerweise sind Displays mit einer Hinterleuchtungseinheit versehen, mit der sich die Anzeigefläche des Display hinterleuchten lässt. Eine derartige Hinterleuchtungseinheit befindet sich rückwärtig der Anzeigefläche des Displays. Zwischen der Hinterleuchtungseinheit und den elektronischen Komponenten des Displays befindet sich im Regelfall ein Diffusor zur Vergleichmäßigung der Hinterleuchtung der Anzeigefläche. Die Hinterleuchtungseinheit bildet die Rückseite des Displays.

Die Erfindung wird nachfolgend anhand eines Ausführungsbeispiels und unter Bezugnahme auf die Zeichnung erläutert. Im Einzelnen zeigen dabei:
- Fig. 1: eine Ansicht auf die Instrumententafel eines Fahrzeugs mit einer aufrechtstehend an der Instrumententafel angeordneten Anzeigevorrichtung und
- Fig. 2: einen Schnitt durch die Anzeigevorrichtung gemäß II - II der Fig. 1 zur Verdeutlichung des Aufbaus der Anzeigevorrichtung.

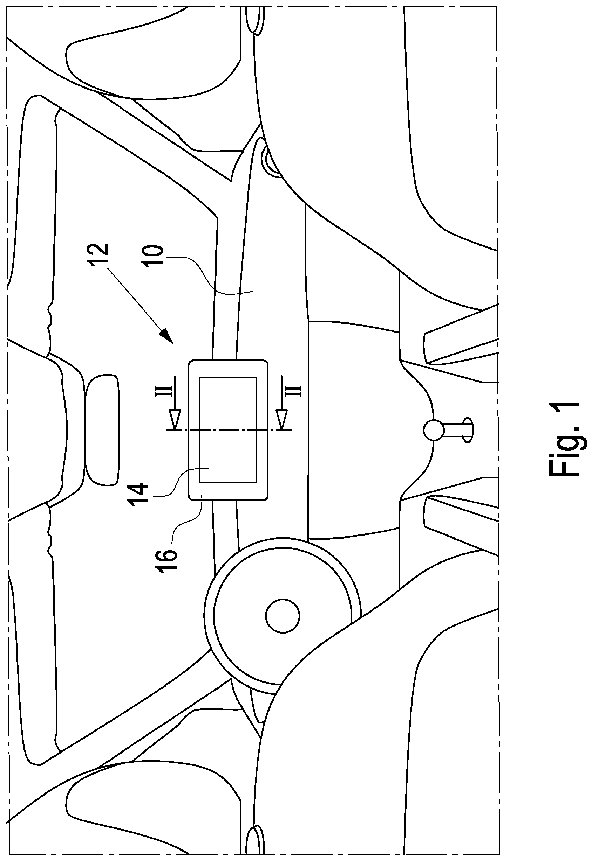

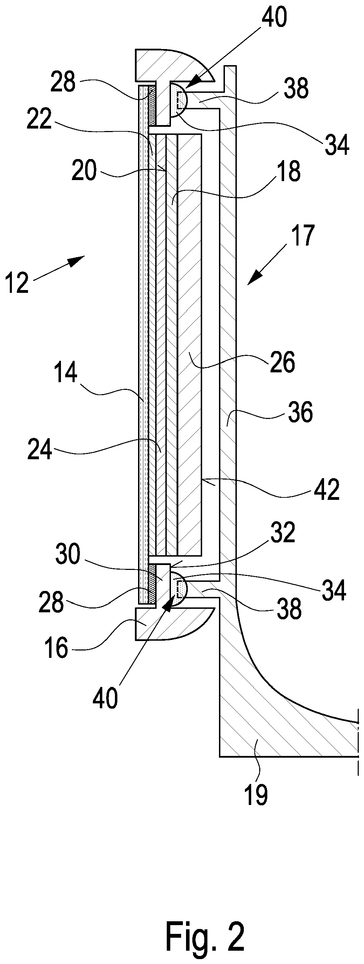

In Fig. 1 ist eine Ansicht auf die Instrumententafel 10 im Innenraum eines Fahrzeugs gezeigt. An der Instrumententafel 10 befindet sich freistehend eine Anzeigevorrichtung 12, die in diesem Ausführungsbeispiel als Touchscreen ausgeführt ist. Die Anzeigevorrichtung 12 weist an ihrer Vorderseite eine Abdeckscheibe 14 mit einem umlaufenden Zierrahmen 16 auf. Rückseitig zur Abdeckscheibe 14 befindet sich eine die Anzeigevorrichtung 12 zur Rückseite abschließende Gehäuseschale 17 mit einem Montageteil 19 zur freistehenden Montage an der Instrumententafel 10 (siehe Fig. 2).

Hinter der Abdeckscheibe 14 befindet sich das eigentliche Display 18 mit Anzeigefläche 20. Zwischen der Abdeckscheibe 14 und dem Display 18 befindet sich typischerweise ein Touchpanel 22, das mittels eines transparenten Klebers (nicht dargestellt) mit der Abdeckscheibe 14 verbunden ist und an dem die Anzeigefläche 20 des Display 18 mittels einer transparenten Kleberschicht 24 (Optical Bonding) angebunden ist. Hinter dem Display 18 befindet sich normalerweise eine Hinterleuchtungseinheit 26 mit Diffusor (nicht dargestellt). Der Zierrahmen 16 ist mit der Abdeckscheibe 14 beispielsweise klebend verbunden, wobei der Kleber bei 28 gezeigt ist. Der Zierrahmen 16 kann aber auch nicht entsprechend der Erfindung einteilig integral mit der Abdeckscheibe 14 ausgeführt sein. Der Zierrahmen 16 weist einen nach innen vorstehenden Verbindungsabschnitt 30 als eine Art Innenflansch auf, auf dem mittels des Klebers 28 die Abdeckscheibe 14 klebend aufliegt. Auf der dem Kleber 28 abgewandten Unterseite des Verbindungsabschnitts 30 befindet sich eine Kleberauftragfläche 32, auf der ein strang- bzw. streifenförmiges Klebermaterialbett 34 aufgetragen ist.

Die Gehäuseschale 17 weist eine Rückwand 36 und einen von dieser aufragenden umlaufenden Randsteg 38 auf, dessen freies Ende 40 in das Klebermaterialbett 34 eingetaucht ist, und zwar in diesem Ausführungsbeispiel mit Abstand zur Kleberauftragfläche 32 des Verbindungsabschnitts 30 des Zierrahmens 16. Im verklebten Zustand von Gehäuseschale 17 und Zierrahmen 16 befindet sich die Rückseite 40 des Display 18 im Abstand zur Rückwand 36 der Gehäuseschale 17.

Für die Montage der Anzeigevorrichtung 12 wird die Gehäuseschale 17 beispielsweise auf das an der Abdeckscheibe 14 mit Zierrahmen 16 vormontierte Display 18 aufgesetzt. Das Display 18 ist zu diesem Zeitpunkt mit der Abdeckscheibe 14 verbunden. Auch befindet sich der Zierrahmen 16 der Abdeckscheibe bzw. der Anzeigevorrichtung 12 bereits an der Abdeckscheibe 14. Mittels einer Positioniervorrichtung wird dann die Gehäuseschale 17 dergestalt von hinten über das Display 18 gestülpt, dass das freie Ende 40 des Randstegs 38 in das noch nicht ausgehärtete Klebermaterialbett 34 eingedrückt wird. Dabei wird darauf geachtet, dass die Rückwand 36 der Gehäuseschale 17 zur Rückseite 42 des Display 18 beabstandet bleibt. Dadurch, dass sich Randsteg 38 und Verbindungsabschnitt 30 des Zierrahmens 16 nicht berühren, können mögliche Fertigungstoleranzen der beiden gemäß dem zuvor genannten Verfahren verbundenen Teilkomponenten ausgeglichen werden. Außerdem besteht die Möglichkeit, die Designfuge zwischen dem Zierrahmen 16 und der Gehäuseschale 17 einzustellen.

### Bezuaszeichenliste

10 Instrumententafel
12 Anzeigevorrichtung
14 Abdeckscheibe
16 Zierrahmen
17 Gehäuseschale
18 Display
19 Montageteil
20 Anzeigefläche
22 Touchpanel
24 transparente Kleberschicht
26 Hinterleuchtungseinheit
28 Kleber
30 Verbindungsabschnitt des Zierrahmens
32 Kleberauftragfläche
34 Klebermaterialbett
36 Rückwand der Gehäuseschale
38 Randsteg
40 Ende des Randstegs
42 Rückseite des Displays

## Patentansprüche

1. Anzeigevorrichtung (12) für ein Fahrzeug, mit
- einem Display (18) mit einer Anzeigefläche (20) an einer Vorderseite und mit einer dieser abgewandten Rückseite,
- einer vor der Anzeigefläche (20) angeordneten Abdeckscheibe (14) mit einem Rand und
- einer rückseitigen Gehäuseschale (17), die eine Rückwand (36) mit einem von dieser aufragenden Randsteg (38) aufweist,
- wobei die Rückwand (36) der Gehäuseschale (17) mit Abstand zur Rückseite des Displays (18) angeordnet ist,
**dadurch gekennzeichnet,**
- **dass** der Zierrahmen (16) einen nach innen vorstehenden Verbindungsabschnitt (30) als einen Innenflansch aufweist, auf dem mittels eines Klebers (28) die Abdeckscheibe (14) klebend aufliegt, so dass der Rand der Abdeckscheibe (14) mit dem Zierrahmen (16) verbunden ist und
- **dass** der Randsteg (38) der Gehäuseschale (17) mit dem Zierrahmen (16) mittels eines Klebers verbunden ist.

2. Anzeigevorrichtung nach Anspruch 1, **dadurch gekennzeichnet, dass** die Gehäuseschale (17) ein Montageteil (19) für die Montage der Gehäuseschale (17) in einem Fahrzeug zur freistehenden Anordnung der Anzeigevorrichtung (12) an der und/oder auf der und/oder in der Fahrzeug-Instrumententafel aufweist.

3. Anzeigevorrichtung (12) nach Anspruch 1 oder 2, **dadurch gekennzeichnet, dass** der den Randsteg (38) der Gehäuseschale (17) mit dem Zierrahmen (16) an der Abdeckscheibe (14) des Displays (18) verbindende Kleber (28) in Form eines streifenförmigen Klebermaterialbetts (34) auf dem Zierrahmen (16) verlaufend ausgebildet ist, in das der Randsteg (38) der Gehäuseschale (17) an seinem der Rückwand (36) der Gehäuseschale (17) abgewandten Ende (40) eingetaucht ist.

4. Anzeigevorrichtung nach Anspruch 3, **dadurch gekennzeichnet, dass** der Randsteg (38) der Gehäuseschale (17) an seinem der Rückwand (36) der Gehäuseschale (17) abgewandten Ende (40) in das Klebermaterialbett (34) unter - in Verlängerung des Randstegs zum Zierrahmen (16) hin betrachtet - Einhaltung eines Abstands zum Zierrahmen (16) eingetaucht ist.

5. Anzeigevorrichtung (12) nach einem der Ansprüche 1 bis 4, **dadurch gekennzeichnet, dass** der Zierrahmen (16) den um die Abdeckscheibe (14) umlaufenden Verbindungsabschnitt mit einer Kleberauftragfläche (32) für den den Randsteg (38) der Gehäuseschale (17) mit dem Zierrahmen (16) an der Abdeckscheibe (14) des Displays (18) verbindenden Kleber (28) aufweist.

6. Anzeigevorrichtung (12) nach einem der Ansprüche 1 bis 5, **dadurch gekennzeichnet, dass** das Display (18) an seiner Anzeigefläche (20) mittels einer transparenten Kleberschicht (24) mit der Abdeckscheibe (14) verbunden ist.

7. Anzeigevorrichtung (12) nach einem der Ansprüche 1 bis 6, **dadurch gekennzeichnet, dass** das Display (18) oder die Abdeckscheibe (14) ein Touchpanel (22) aufweist.

## Claims

1. A display device (12) for a vehicle, comprising:
- a display (18) with a display surface (20) on a front side and with a rear side opposite thereto,
- a cover screen (14) arranged in front of the display surface (20), the cover screen having an edge and
- a rear housing shell (17) which has a rear wall (36) with an edge web (38) protruding from the latter,
- the rear wall (36) of the housing shell (17) being arranged at a distance from the rear side of the display (18) and
**characterized in that**
- a decorative frame (16) comprises an inward protruding connecting section (30) as an inner flange, on which the cover screen (14) is glued by means of an adhesive (28), so that the edge of the cover screen (14) is connected to the decorative frame (16) and
- the edge web (38) of the housing shell (17) is connected to the decorative frame (16) by means of an adhesive.

2. The display device according to claim 1, **characterized in that** the housing shell (17) comprises a mounting part (19) for mounting the housing shell (17) in a vehicle for a self-supporting arrangement of the display device (12) at and/or on and/or in the vehicle instrument panel.

3. The display device (12) according to claim 1 or 2, **characterized in that** the adhesive (28) connecting the edge web (38) of the housing shell (17) to the decorative frame (16) on the cover screen (14) of the display (18) is designed as a strip-shaped adhesive material bed (34) on the decorative frame (16), into which the edge web (38) of the housing shell (17) is immersed at its end (40) averted from the rear wall (36) of the housing shell (17).

4. The display device according to claim 3, **characterized in that** the edge web (38) of the housing shell (17) is immersed into the adhesive material bed (34) at its end (40) averted from the rear wall (36) of the housing shell (17) while maintaining a distance from the decorative frame (16) as viewed in extension of the edge web.

5. The display device (12) according to one of claims 1 to 4, **characterized in that** the decorative frame (16) comprises the connecting section extending circumferentially around the cover screen (14) and having an adhesive application surface (32) for the adhesive (28) connecting the edge web (38) of the housing shell (17) to the decorative frame (16) on the cover screen (14) of the display (18).

6. The display device (12) according to one of claims 1 to 5, **characterized in that** the display (18) is connected at its display surface (20) to the cover screen (14) by means of a transparent adhesive layer (24).

7. The display device (12) according to one of claims 1 to 6, **characterized in that** the display (16) or the cover screen (14) comprises a touch panel (22).

## Revendications

1. Dispositif d'affichage (12) pour un véhicule, avec
- un afficheur (18) muni d'une surface d'affichage (20) sur un côté avant et d'un côté arrière éloigné du côté avant,
- un disque de couverture (14) disposé devant la surface d'affichage (20) avec un bord et
- une coque de logement (17) côté arrière qui présente une paroi arrière (36) munie d'une nervure de bord (38) qui se dresse à partir de celle-ci,
- la paroi arrière (36) de la coque de logement (17) étant disposée à distance du côté arrière de l'afficheur (18),
**caractérisé en ce que**
- le cadre décoratif (16) présente un tronçon de raccordement (30), dépassant vers l'intérieur à titre de bride intérieure, sur lequel le disque de couverture (14) repose de façon collée au moyen d'un adhésif (28) de sorte que le bord du disque de couverture (14) est raccordé au cadre décoratif (16), et
- **en ce que** la nervure de bord (38) de la coque de logement (17) est raccordée au cadre décoratif (16) au moyen d'un adhésif.

2. Dispositif d'affichage selon la revendication 1, **caractérisé en ce que** la coque de logement (17) présente une pièce de montage (19) pour le montage de la coque de logement (17) dans un véhicule pour la disposition indépendante du dispositif d'affichage (12) au niveau du et/ou sur le et/ou sur le et/ou dans le tableau de bord du véhicule.

3. Dispositif d'affichage (12) selon la revendication 1 ou 2, **caractérisé en ce que** l'adhésif (28) raccordant la nervure de bord (38) de la coque de logement (17) au cadre décoratif (16) au niveau du disque de couverture (14) de l'afficheur (18) est constitué sous la forme d'un lit de matériau adhésif (34) en forme de bande disposé sur le cadre décoratif (16), lit dans lequel la nervure de bord (38) de la coque de logement (17) est immergée au niveau de son extrémité (40) éloignée de la paroi arrière (36) de la coque de logement (17).

4. Dispositif d'affichage selon la revendication 3, **caractérisé en ce que**, au niveau de son extrémité (40) éloignée de la paroi arrière (36) de la coque de logement (17), la nervure de bord (38) de la coque de logement (17) est immergée dans le lit de matériau adhésif (34) - dans le prolongement de la nervure de bord vu en direction du cadre décoratif (16) - tout en conservant une distance au cadre décoratif (16).

5. Dispositif d'affichage (12) selon l'une des revendications 1 à 4, **caractérisé en ce que** le cadre décoratif (16) présente le tronçon de raccordement entourant le disque de couverture (14) avec une surface d'application d'adhésif (32) pour l'adhésif (28) raccordant la nervure de bord (38) de la coque de logement (17) au cadre décoratif (16) au niveau du disque de couverture (14) de l'afficheur (18).

6. Dispositif d'affichage (12) selon l'une des revendications 1 à 5, **caractérisé en ce que**, au niveau de sa surface d'affichage (20), l'afficheur (18) est raccordé au disque de couverture (14) au moyen d'une couche d'adhésif (24) transparente.

7. Dispositif d'affichage (12) selon l'une des revendications 1 à 6, **caractérisé en ce que** l'afficheur (18) ou le disque de couverture (14) présente un panneau tactile (22).
